# EUROPÄISCHE PATENTSCHRIFT

(11) **EP 0 847 554 B1**
(45) Veröffentlichungstag und Bekanntmachung des Hinweises auf die Patenterteilung: **30.05.2001**
(21) Anmeldenummer: 96932446.6
(22) Anmeldetag: 19.08.1996
(51) Int. Cl.: G06F 12/02

(54) **PROZESSOREINHEIT MIT STECKBAREM SPEICHER**
PROCESSOR UNIT WITH PLUG-IN MEMORY
ENSEMBLE PROCESSEUR A MEMOIRE ENFICHABLE

(30) Priorität: 28.08.1995 DE 29513792 U
(43) Veröffentlichungstag der Anmeldung: 17.06.1998
(73) Patentinhaber: SIEMENS AKTIENGESELLSCHAFT, 80333 München (DE)
(72) Erfinder: RENSCHLER, Albert, D-76275 Ettlingen (DE)
(86) Internationale Anmeldenummer: DE9601541
(87) Internationale Veröffentlichungsnummer: WO9708619

(56) Entgegenhaltungen:
- WO-A-94/20906
- WO-A-95/10083
- COMPUTER TECHNOLOGY REVIEW, 21.Dezember 1994, Seite 84, 86, 88 XP000429678 FRIEDMANN A: "BLOCK FLASH FILE SYSTEMS DELIVER MASS STORAGE FOR MOBILE COMPUTING"
- JOURNAL OF PARALLEL AND DISTRIBUTED COMPUTING, Bd. 20, Nr. 2, 1.Februar 1994, Seiten 176-186, XP000432476 WEEMEEUW P ET AL: "A FINE-GRAINED PARALLEL MEMORY COMPACTION ALGORITHM"

## Beschreibung

Die Erfindung betrifft eine Prozessoreinheit gemäß dem Oberbegriff des Anspruchs 1. Darüber hinaus betrifft die Erfindung ein steckbares Speichermodul.

Eine Prozessoreinheit mit einem Speichermodul ist aus dem Siemens-Katalog ST 54.1, Ausgabe 1994, bekannt. Das Speichermodul weist entweder einen RAM- oder einen EPROM-Baustein auf und ist zur Speicherung eines Steuerprogramms zur Steuerung eines technischen Prozesses vorgesehen. Ein Anwender erstellt mit einem Programmiergerät nach Maßgabe einer zu lösenden Steuerungsaufgabe das Steuerprogramm, welches, für den Fall, daß das Speichermodul mit einem RAM-Baustein bestückt ist, direkt in das in die Prozessoreinheit gesteckte Speichermodul eingegeben wird (on-line-Programmierung). Ist dagegen das Speichermodul mit einem EPROM-Baustein bestückt, programmiert der Anwender zunächst das in das Programmiergerät gesteckte Speichermodul und steckt anschließend das Modul in die Prozessoreinheit (off-line-Programmierung). Zu Beginn des Steuerbetriebs überträgt der Prozessor das Steuerprogramm vom Speichermodul in einen RAM-Arbeitsspeicher der Prozessoreinheit, auf welchen der Prozessor während des Steuerbetriebs lesend und schreibend zugreift.
Die Bestückung des Speichermoduls mit einem EPROM-Baustein hat den Vorteil, daß beim Ausfall der zur Versorgung des Speichermoduls erforderlichen Spannung das Steuerprogramm erhalten bleibt und nach der Wiederkehr dieser Versorgungsspannung nicht erneut in das Speichermodul geladen werden muß. Allerdings ist es nicht möglich, weitere Software-Bausteine, z. B. Bausteine in Form von Rezeptur-Bausteinen, in das Steuerprogramm rasch einzubinden. Das Steuerprogramm muß wiederum off-line im Programmiergerät erstellt, in das EPROM hinterlegt und das Speichermodul erneut in die Prozessoreinheit gesteckt werden.
Ist das Speichermodul mit einem RAM-Baustein bestückt, so ist das Steuerprogramm zwar leicht on-line änderbar, das Steuerprogramm geht aber verloren, falls die Versorgungsspannung ausfällt. Es ist erforderlich, das Steuerprogramm nach Wiederkehr der Versorgungsspannung erneut in den RAM-Baustein zu laden.

Eine Prozessoreinheit gemäß dem Oberbegriff des Anspruchs 1 ist aus der Druckschrift "Computer Technology Review", 21. Dezember 1994, Seiten 84, 86 und 88, Friedmann, A., "Block Flash File Systems Deliver Mass Storage For Mobile Computing" bekannt. Dort sind bestimmte Bereiche des Speichermoduls in einer EPROM-Betriebsart und andere Bereiche in einer RAM-Betriebsart betreibbar, wobei nach einer Schreiboperation die in der RAM-Betriebsart betreibbaren Bereiche in die EPROM-Betriebsart geschaltet werden.

Aus der Druckschrift "Journal of Parallel and Distributed Computing", Band 20, No. 2, 1994, Seiten 176 bis 186, Weemeeuw, P., "A Fine-Grained Parallel Memory Compaction Algorithm", ist ein Algorithmus zur Speicherverwaltung bekannt. Dort ist vorgesehen, den Speicherraum in zwei Bereiche mit einer einzelnen Grenze zwischen den beiden Bereichen einzuteilen.

Der vorliegenden Erfindung liegt die Aufgabe zugrunde, eine Prozessoreinheit anzugeben, deren Speichermodul im Hinblick auf eine Modifikation eines im Speichermodul hinterlegten Steuerprogramms zur Steuerung eines technischen Prozesses flexibler einsetzbar ist.

Im Hinblick auf die Prozessoreinheit wird diese Aufgabe durch die im kennzeichnenden Teil des Anspruchs 1 angegebenen Maßnahmen, im Hinblick auf das Speichermodul durch die im Anspruch 4 angegebenen Maßnahmen gelöst.

Durch die Aufteilung des Speichermoduls in einen RAM- und einen EPROM-Bereich kann ein Anwender wählen, welcher Bereich RAM- oder EPROM-Verhalten aufweisen soll. Der Anwender konfiguriert sich sein "Mischmodul" selbst; dabei ist die Aufteilung der Bereiche dynamisch änderbar. Vorteilhaft weist das Speichermodul einen Kennspeicher auf, in welchem eine Kennung über die Aufteilung des Moduls in Bereiche hinterlegt ist und die anzeigt, wo die Grenze zwischen RAM- und EPROM-Bereich liegt. Dadurch kann das Speichermodul aus der Prozessoreinheit gezogen und in eine andere Prozessoreinheit gesteckt werden.
Das Speichermodul ist mit einem aus dem Datenbuch "Flash Memory Products", 1992/93, der Firma Advanced Micro Devices bekannten FLASH-EPROM oder einem ebenfalls an sich bekannten FRAM bestückt.
Die erfindungsgemäße Prozessoreinheit wird insbesondere in einer speicherprogrammierbaren Steuerung eingesetzt, in welcher Software-Funktionsbausteine in ein Steuerprogramm häufig eingekettet oder gelöscht werden müssen. Die Änderungen des Steuerprogramms erfolgen in der RAM-Betriebsart. Sind die Änderungen abgeschlossen, schaltet die Prozessoreinheit in die EPROM-Betriebsart, wodurch das Steuerprogramm auch nach einem Ausfall der Versorgungsspannung erhalten bleibt.

Anhand der Zeichnung, in der ein Ausführungsbeispiel der Erfindung veranschaulicht ist, werden im folgenden die Erfindung, deren Ausgestaltungen sowie Vorteile näher erläutert.

Es zeigen:
- Figur 1: ein Blockschaltbild einer speicherprogrammierbaren Steuerung und
- Figur 2a: bis Figur 2h Speicheraufteilungen eines FLASH-EPROMs.

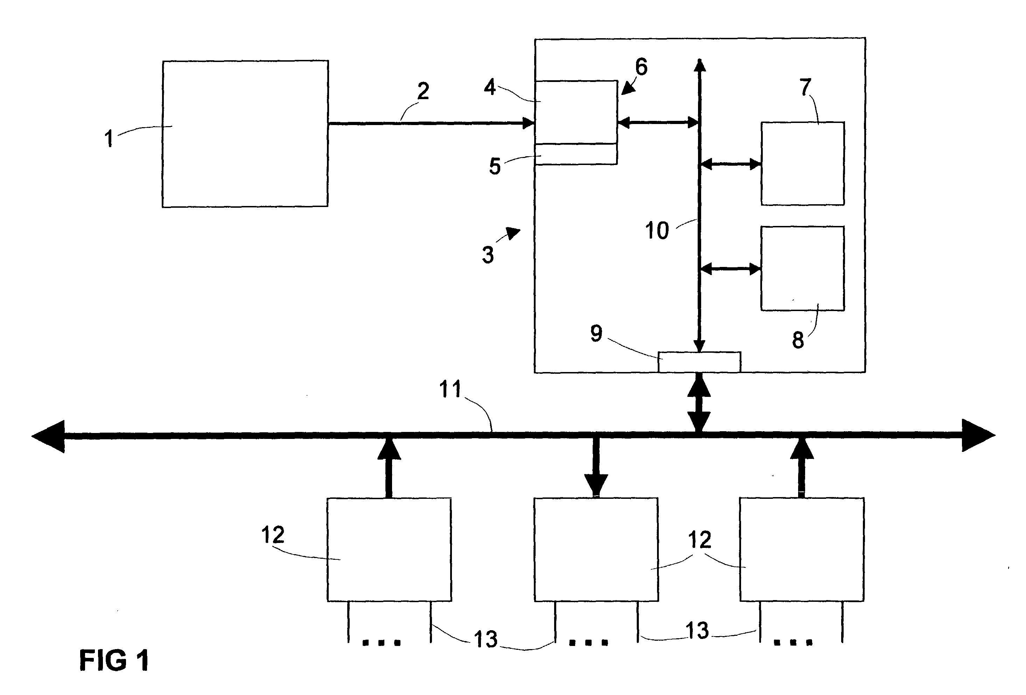

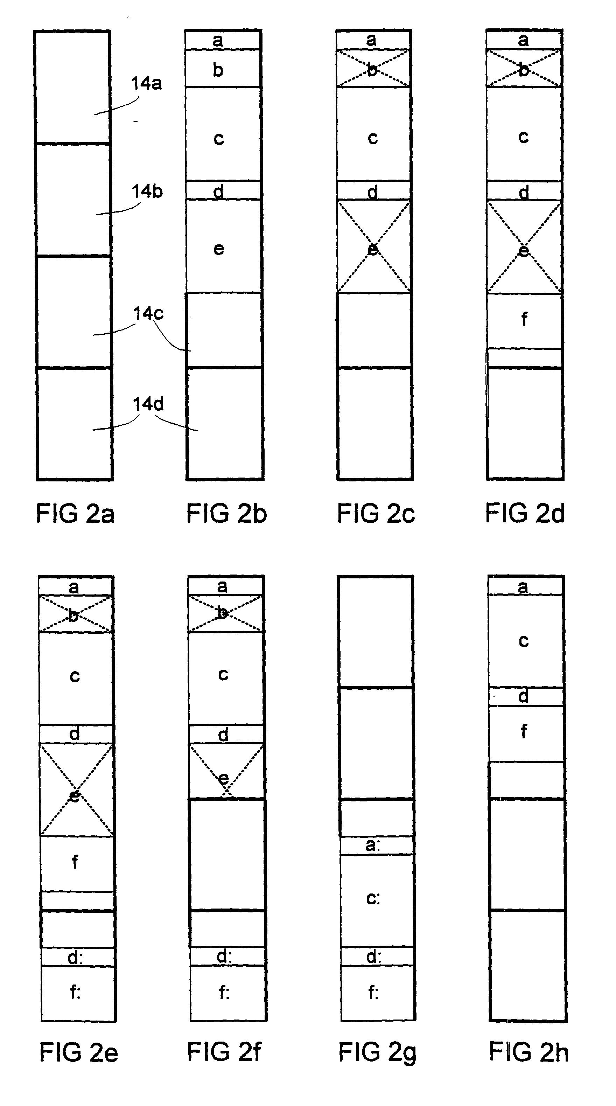

In Figur 1 ist mit 1 ein Programmiergerät bezeichnet, mit welchem ein Anwender in einer geeigneten Programmiersprache ein Steuerprogramm zur Lösung einer Steueraufgabe erstellt. Über Leitungen 2 überträgt das Programmiergerät 1 on-line das Steuerprogramm in Form von Daten-, Adreß- und Steuerinformationen an ein in eine Prozessoreinheit 3 gestecktes, mit einem FLASH-EPROM 4 und einem Kennspeicher 5 versehenes Speichermodul 6. Die Prozessoreinheit 3 weist ferner einen Prozessor 7, einen Arbeitsspeicher 8, eine Anschaltung 9 und einen internen Bus 10 auf, der die Komponenten der Prozessoreinheit 3 miteinander verbindet und über den die Komponenten Daten austauschen. Die Prozessoreinheit 3 ist über die Anschaltung 9 und einen externen Bus 11 mit Peripherieeinheiten 12 gekoppelt, z. B. Peripherieeinheiten in Form von digitalen oder analogen Ein-/Ausgabeeinheiten, an welche Leitungen 13 zum Anschluß von hier nicht dargestellten Meßwertgebern geführt sind. Die Prozessoreinheit 3 und die Peripherieeinheiten 12 sind Bestandteile der speicherprogrammierbaren Steuerung.
Zur Verdeutlichung der Erfindung wird auf Figur 2 verwiesen, in welcher verschiedene Speicheraufteilungen des FLASH-EPROMs 4 (Figur 1) dargestellt sind. Es ist angenommen, daß das FLASH-EPROM vier Segmente 14a ... 14d aufweist (Figur 2a) und daß das FLASH-EPROM 4 byteweise beschrieben, der Inhalt des FLASH-EPROMs 4 allerdings nur segmentweise gelöscht werden kann. Das FLASH-EPROM 4 ist mit fünf Software-Funktionsbausteinen a ... e eines Steuerprogramms zu belegen, die das Programmiergerät 1 on-line zum FLASH-EPROM 4 überträgt (Figur 2b). Dazu gibt ein Anwender in das Programmiergerät 1 eine geeignete Anweisung ein, z. B. eine Anweisung "Baustein a, Baustein b, ... laden (RAM)". Diese Anweisung überträgt das Programmiergerät 1 der Prozessoreinheit 3, deren Prozessor 7 den Kennspeicher 5 des Speichermoduls ausliest, um festzustellen, welcher Bereich des FLASH-EPROMs 4 in der RAM- bzw. EPROM-Betriebsart betreibbar ist. Im vorliegenden Beispiel ist das FLASH-EPROM 4 leer, wodurch alle vier Segmente 14a ... 14d als RAM-Baustein genutzt werden können. Ein in einem hier nicht dargestellten ROM der Prozessoreinheit 3 hinterlegter Verwaltungsalgorithmus, den der Prozessor 7 bearbeitet, teilt den Software-Funktionsbausteinen a ... e Adressen zu, unter welchen diese Bausteine im FLASH-EPROM 4 abgespeichert werden. Um zu verhindern, daß das die Software-Funktionsbausteine a ... e umfassende Steuerprogramm durch Ausfall der Versorgungsspannung nicht verlorengeht, ist es erforderlich, mit einer weiteren Anweisung, z. B. mit einer Anweisung "Datenträger ein", das FLASH-EPROM 4 in die EPROM-Betriebsart zu schalten. Dabei hinterlegt der Verwaltungsalgorithmus die Software-Funktionsbausteine a ... e, ausgehend von einer Adresse 0, lückenlos in das FLASH-EPROM 4 und stellt die Grenze ein, die anzeigt, bis zu welcher Adresse das FLASH-EPROM 4 im EPROM-Modus und welcher verbleibende Bereich im RAM-Modus ist. Diese Grenze hinterlegt der Prozessor 7 im Kennspeicher 5 des Speichermoduls 4.
Es ist auch möglich, die Software-Funktionsbausteine a ... e mit einer Anweisung "Baustein a, Baustein b, ... laden (EPROM)" direkt in einen EPROM-Bereich des FLASH-EPROMs 4 zu hinterlegen. Der Verwaltungsalgorithmus löscht alle Segmente 14a ... 14d des FLASH-EPROMs 4 und schreibt die Software-Funktionsbausteine a ... e ab einer Adresse 0 lückenlos in das FLASH-EPROM 4 ein, wobei der Bereich ab der Adresse 0 bis zur Bereichsgrenze, die in den Kennspeicher 5 abgespeichert wird, als EPROM-Bereich und der verbleibende Bereich des FLASH-EPROMs 4 als RAM-Bereich eingestellt ist.

Es ist angenommen, daß das Steuerprogramm modifiziert werden muß und die Software-Funktionsbausteine b, e durch den Software-Funktionsbaustein f zu ersetzen sind. Dies bedeutet, daß die Software-Funktionsbausteine b, e zu löschen sind (in Figur 2c durch unterbrochene Linie angedeutet) und der Software-Funktionsbaustein neu zu laden ist. Dazu gibt der Anwender zunächst die Anweisung "Datenträger aus" in das Programmiergerät 1 ein, die der Prozessoreinheit 3 übertragen und von dieser Einheit bearbeitet wird. Alle Segmente 14a ... 14d werden in den RAM-Modus versetzt, und der Inhalt des FLASH-EPROMs 4 kann geändert werden. Mit den Anweisungen "Software-Funktionsbaustein b löschen", "Software-Funktionsbaustein e löschen" und "Software-Funktionsbaustein f laden" leitet der Prozessor 7 zunächst den Löschvorgang ein (Figur 2c). Nach den eingangs gemachten Voraussetzungen ist nur ein segmentweises Löschen möglich, wodurch die Verwaltungssoftware zunächst lediglich Zugriffe auf die Software-Funktionsbausteine b, e sperrt, diese aber nicht löscht, da beim Löschen auch Teile der Software-Funktionsbausteine a, c im Segment 14a und Teile der Software-Funktionsbausteine c, d im Segment 14b gelöscht werden würden. Anschließend hinterlegt der Prozessor den Software-Funktionsbaustein f ab der Grenze in das FLASH-EPROM 4 (Figur 2d) und leitet einen Komprimiervorgang ein, um "Lücken" im FLASH-EPROM zu beseitigen. Dabei kopiert der Prozessor 7 die Software-Funktionsbausteine d, f in das Segment 14d (in Figur 2e mit d:, f: gekennzeichnet) und löscht anschließend das Segment 14c, wodurch Teile des Software-Funktionsbausteins e und der Software-Funktionsbaustein f vollständig gelöscht werden (Figur 2f). Im nächsten Schritt kopiert der Prozessor 7 den Software-Funktionsbaustein a in das Segment 14c und Teile des Software-Funktionsbausteins c in das Segment 14c und 14d (in Figur 2g mit a:, c: gekennzeichnet) und löscht die Segmente 14a, 14b. Der Komprimiervorgang ist damit abgeschlossen. Mit der Anweisung "Datenträger ein" schaltet das FLASH-EPROM 4 wiederum in die EPROM-Betriebsart, und der Prozessor 7 legt die eingeketteten Software-Funktionsbausteine a ... e in den Bereich ab der Adresse 0 lückenlos ab (Figur 2h Software-Funktionsbausteine a ... e). Ferner schreibt der Prozessor 7 in den Kennspeicher 5 des Speichermoduls 4 die Grenze ein, die wiederum anzeigt, bis zu welcher Adresse das FLASH-EPROM 4 im EPROM-Modus und welcher verbleibende Bereich im RAM-Modus betreibbar ist.

## Patentansprüche

1. Prozessoreinheit
- mit einem Prozessor (7),
- mit einem steckbaren Speichermodul (6), das in zwei Bereiche einteilbar ist, von denen ein Bereich in einer EPROM- und ein Bereich in einer RAM-Betriebsart betreibbar ist, und
- mit Mitteln zum automatischen Einstellen der Grenze zwischen den Bereichen,
**dadurch gekennzeichnet,**
- daß in das Speichermodul ein Steuerprogramm zur Steuerung eines technischen Prozesses hinterlegbar ist, wobei das Steuerprogramm auf einem Programmiergerät erstellbar und on-line der Prozessoreinheit (3) übertragbar ist,
- daß der EPROM-Bereich des Speichermoduls (6) zur Hinterlegung des Steuerprogramms vorgesehen ist,
- daß die Prozessoreinheit (3) mit Mitteln versehen ist, welche zur Modifikation des Steuerprogramms das Speichermodul (6) in die RAM-Betriebsart schalten und welche nach der Modifikation des Steuerprogramms den Bereich des Speichermoduls (6), in welchem das Steuerprogramm hinterlegt ist, in die EPROM-Betriebsart schalten, wobei für den verbleibenden Bereich die RAM-Betriebsart eingestellt bleibt, und
- daß die Mittel zur Bereichseinstellung nach Maßgabe von der Prozessoreinheit (3) zuführbaren Anweisungen die Grenze automatisch einstellen, die anzeigt, welcher Bereich des Speichermoduls (6) in der RAM-Betriebsart und welcher in der EPROM-Betriebsart ist.

2. Prozessoreinheit nach Anspruch 1, **dadurch gekennzeichnet,** daß das Speichermodul (6) einen Kennspeicher (5) aufweist, in welchem die Grenze zwischen den Bereichen hinterlegt ist.

3. Prozessoreinheit nach Anspruch 1 oder 2, **dadurch gekennzeichnet,** daß das Speichermodul (6) ein FLASH-EPROM (4) aufweist.

4. In eine Prozessoreinheit steckbares Speichermodul (6), das in zwei Bereiche einteilbar ist, von denen ein Bereich in einer EPROM- und ein Bereich in einer RAM-Betriebsart betreibbar ist, wobei die Grenze zwischen den Bereichen automatisch einstellbar ist,
**dadurch gekennzeichnet**,
- daß in das Speichermodul ein Steuerprogramm zur Steuerung eines technischen Prozesses hinterlegbar ist, wobei das Steuerprogramm auf einem Programmiergerät erstellbar und on-line der Prozessoreinheit (3) übertragbar ist,
- daß der EPROM-Bereich des Speichermoduls (6) zur Hinterlegung des Steuerprogramms vorgesehen ist,
- daß zur Modifikation des Steuerprogramms das Speichermodul (6) durch Mittel der Prozessoreinheit (3) in die RAM-Betriebsart schaltbar ist und der Bereich des Speichermoduls (6), in welchem das Steuerprogramm hinterlegt ist, nach der Modifikation des Steuerprogramms in die EPROM-Betriebsart schaltbar ist, wobei für den verbleibenden Bereich des Speichermoduls (6) die RAM-Betriebsart eingestellt bleibt,
- daß die Grenze zwischen den Bereichen nach Maßgabe von der Prozessoreinheit (3) zuführbaren Anweisungen automatisch eingestellt wird.

5. Steckbares Speichermodul nach Anspruch 4, **dadurch gekennzeichnet,** daß das Speichermodul (6) einen Kennspeicher (5) aufweist, in welchem die Grenze zwischen den Bereichen hinterlegt ist.

6. Speichermodul nach Anspruch 4 oder 5, **dadurch gekennzeichnet,** daß das Speichermodul (6) ein FLASH-EPROM (4) aufweist.

## Claims

1. Processor unit
- with a processor (7),
- with a plug-in memory module (6), that can be divided into two areas, of which one area can be operated in an EPROM operating mode and one area can be operated in a RAM operating mode, and
- with means for automatically setting the boundary between the areas,
characterised in that
- a control program for controlling a technical process can be stored in the memory module, wherein the control program can be created on a programming device and can be transmitted on-line to the processor unit (3),
- the EPROM area of the memory module (6) is designed to store the control program,
- the processor unit (3) is provided with means which, for modification of the control program, switch the memory module (6) to the RAM operating mode, and which, following the modification of the control program, switch the area of the memory module (6), in which the control program is stored, to the EPROM operating mode, wherein the RAM operating mode remains set for the remaining area, and
- the means for setting the area automatically set the boundary according to instructions which can be fed to the processor unit (3), which boundary indicates which area of the memory module (6) is in the RAM operating mode and which is in the EPROM operating mode.

2. Processor unit according to Claim 1, characterised in that the memory module (6) has a code memory (5) in which the boundary between the areas is stored.

3. Processor unit according to Claim 1 or 2,
characterised in that the memory module (6) has a FLASH EPROM (4).

4. A memory module (6) that can be plugged into a processor unit, which module can be divided into two areas, of which one area can be operated in an EPROM operating mode and one area can be operated in a RAM operating mode, wherein the boundary between the areas can be set automatically,
characterised in that,
- a control program for controlling a technical process can be stored in the memory module, wherein the control program can be created on a programming device and can be transmitted on-line to the processor unit (3),
- the EPROM area of the memory module (6) is designed to store the control program,
- for modification of the control program the memory module (6) can be switched to the RAM operating mode by processor unit (3) means and, following the modification of the control program, the area of the memory module (6), in which the control program is stored, can be switched to the EPROM operating mode, wherein the RAM operating mode remains set for the remaining area of the memory module (6),
- the boundary between the areas is automatically set according to instructions which can be fed to the processor unit (3).

5. Plug-in memory module according to Claim 4,
characterised in that the memory module (6) has a code memory (5) in which the boundary between the areas is stored.

6. Memory module according to Claim 4 or 5, characterised in that the memory module (6) has a FLASH EPROM (4).

## Revendications

1. Unité de processeur
- comportant un processeur (7),
- comportant un module (6) de mémoire enfichable, qui peut être divisé en deux zones, dont l'une peut fonctionner en un mode de fonctionnement EPROM et dont l'une peut fonctionner en un mode de fonctionnement RAM, et
- comportant des moyens pour établir automatiquement la limite entre les zones,
caractérisée en ce que
- un programme de commande pour la commande d'une opération technique peut être enregistré dans le module de mémoire, le programme de commande pouvant être produit sur un appareil de programmation et pouvant être transmis en ligne à l'unité (3) de processeur,
- la zone EPROM du module (6) de mémoire est prévue pour l'enregistrement du programme de commande,
- l'unité (3) de processeur est munie de moyens qui branchent le module (6) de mémoire au mode de fonctionnement RAM pour la modification du programme de commande et qui, après la modification du programme de commande, branchent la zone du module (6) de mémoire dans laquelle le programme de commande est enregistré au mode de fonctionnement EPROM, le mode de fonctionnement RAM restant établi pour la zone restante, et
- les moyens d'établissement de zone établissant, suivant la donnée d'instructions pouvant être envoyée à l'unité (3) de processeur, automatiquement la limite qui indique la zone du module (6) de mémoire qui est en mode de fonctionnement RAM et la zone qui est en mode de fonctionnement EPROM.

2. Unité de processeur suivant la revendication 1, caractérisée en ce que le module (6) de mémoire comporte une mémoire (5) d'identification dans laquelle la limite entre les zones est mise en mémoire.

3. Unité de processeur suivant la revendication 1 ou 2, caractérisée en ce que le module (6) de mémoire comporte une FLASH-EPROM (4).

4. Module (6) de mémoire enfichable dans une unité de processeur qui peut être divisé en deux zones, dont une zone peut fonctionner en un mode de fonctionnement EPROM et dont une zone peut fonctionner en un mode de fonctionnement RAM, la limite entre les zones pouvant être établie automatiquement,
caractérisé en ce que
- un programme de commande pour la commande d'une opération technique peut être enregistré dans le module de mémoire, le programme de commande pouvant être produit sur un appareil de programmation et pouvant être transmis en ligne à l'unité (3) de processeur,
- la zone EPROM du module (6) de mémoire est prévue pour l'enregistrement du programme de commande,
- le module (6) de mémoire peut, pour la modification du programme de commande, être branché au mode de fonctionnement RAM par des moyens de l'unité (3) de processeur et la zone du module (6) de mémoire, dans laquelle le programme de commande est enregistré, peut être branchée au mode de fonctionnement EPROM après la modification du programme de commande, le mode de fonctionnement RAM étant établi pour la zone restante du module (6) de mémoire,
- la limite entre les zones étant établie automatiquement suivant la donnée d'instructions pouvant être envoyée à l'unité (3) de processeur.

5. Module de mémoire enfichable suivant la revendication 4, caractérisé en ce que le module (6) de mémoire comporte une mémoire (5) d'identification dans laquelle la limite entre les zones est mise en mémoire.

6. Module de mémoire suivant la revendication 4 ou 5, caractérisé en ce que le module (6) de mémoire comporte une FLASH-EPROM (4).
